Europäisches Patentamt

European Patent Office

Office européen des brevets

(19)

(11) Veröffentlichungsnummer: **0 293 561 B1**

## (12) EUROPÄISCHE PATENTSCHRIFT

(45) Veröffentlichungstag der Patentschrift: **25.09.91**

(51) Int. Cl.⁵: **B60T 8/60, B60K 28/16**

(21) Anmeldenummer: **88103573.7**

(22) Anmeldetag: **08.03.88**

(54) Schaltungsanordnung für Bremsanlagen mit Blockierschutz- und/oder Antriebsschlupf-Regelung.

(30) Priorität: **02.06.87 DE 3718421**

(43) Veröffentlichungstag der Anmeldung:
**07.12.88 Patentblatt 88/49**

(45) Bekanntmachung des Hinweises auf die
Patenterteilung:
**25.09.91 Patentblatt 91/39**

(84) Benannte Vertragsstaaten:
**DE FR GB**

(56) Entgegenhaltungen:
**DE-A- 3 127 302**
**DE-A- 3 413 738**
**FR-A- 2 514 706**

(73) Patentinhaber: **ALFRED TEVES GmbH**
**Guerickestrasse 7 Postfach 119 155**
**W-6000 Frankfurt am Main(DE)**

(72) Erfinder: **Giers, Bernhard**
**Messeler Weg 12**
**W-6101 Rossdorf 1(DE)**

(74) Vertreter: **Blum, Klaus-Dieter, Dipl.-Ing.**
**c/o ALFRED TEVES GMBH Guerickestrasse 7**
**W-6000 Frankfurt/Main 90(DE)**

## Beschreibung

Die Erfindung bezieht sich auf eine für Kraftfahrzeug-Bremsanlagen mit Blockierschutz- und/oder Antriebsschlupf-Regelung vorgesehene Schaltungsanordnung, die mit Radsensoren zur Erzeugung von elektrischen Signalen, die das Raddrehverhalten darstellen, mit elektronischen Schaltkreisen zur Aufbereitung, logischen Verknüpfung und Verarbeitung der Sensorsignale und zur Erzeugung von Bremsdruck- und/oder Antriebsmoment-Steuersignalen, sowie mit Schaltkreisen zur Kurvenerkennung und zur Erzeugung von für die Kurvenfahrt charakteristischen Signalen und zum Vergleich dieser Signale mit der Fahrzeuggeschwindigkeit ausgerüstet ist.

Eine derartige Schaltungsanordnung für Kraftfahrzeuge mit Vortriebsregelung ist bereits aus der DE-C-31 27 302 bekannt. Mit Hilfe der in dieser Patentschrift beschriebenen Kurvenfahrt-Erkennungseinrichtung wird ein für die Kurvenfahrt charakteristisches Signal allein durch Auswertung der von Sensoren, die an den beiden Rädern der nichtangetriebenen Achse angeordnet sind, gelieferten Signale gewonnen. Zur Erhöhung der Fahrstabilität wird mit Hilfe dieses Kurvenfahrt-Signals das Antriebsmoment des Kraftfahrzeugmotors bei einer Kurvenfahrt schon dann reduziert, wenn nur eines der Antriebsräder zum Durchdrehen neigt und gleichzeitig ein Schwellenwert der Fahrzeuggeschwindigkeit überschritten ist. Die Kurvenerkennung beruht allein auf der Messung der Drehzahldifferenz zwischen den beiden Vorderrädern. Eine Drehzahldifferenz, die auf unterschiedliche Abrollradien der beiden Räder, z.B. durch unterschiedliches Profil oder Reifenabnutzung, zurückgeht, wird daher zu einem fehlerhaften Signal führen, oder die Ansprechschwelle der Kurvenerkennung wird so hoch gelegt, daß nur relativ enge Kurven, die aus physikalischen Gründen nur mit geringer Geschwindigkeit zu durchfahren sind, erkannt werden können.

Ferner ist bereits eine Schaltungsanordnung für eine schlupfgeregelte Bremsanlage mit einer Kurvenfahrterkennungsschaltung bekannt, die jeweils den Schlupf der beiden Räder einer Fahrzeugseite addiert und mit der Schlupfsumme der Räder auf der anderen Fahrzeugseite vergleicht (DE-A-34 13 738). Sobald die Differenz der Schlupfsummen beider Fahrzeugseiten einen Grenzwert überschreitet, werden zeitweise die Auswahlkriterien, z.B. von select-low auf select-high, und damit der Bremsdruckverlauf geändert. Auf diese Weise wird der Bremsdruckverlauf den unterschiedlichen Verhältnissen bei Geradeausfahrt und Kurvenfahrt angepaßt, damit in jeder Situation die Fahrstabilität und Lenkbarkeit des Fahrzeugs so weit wie möglich erhalten bleibt. Durch unterschiedliche Abrollradien bedingte Differenzen der Drehgeschwindigkeiten, die Schlupfdifferenzen oder Kurvenfahrt vortäuschen, beeinträchtigen auch bei dieser bekannten Schaltung die Genauigkeit der Kurvenerkennung und der Auswertung dieser Signale.

Der Erfindung liegt daher die Aufgabe zugrunde, die beschriebenen Nachteile bekannter Schaltungsanordnungen zu überwinden und das Entstehen von Fehlsignalen sowie Fehlreaktionen, die insbesondere auf unterschiedlichen Abrollumfang der einzelnen Räder zurückzuführen sind, bei der Kurvenerkennung zu vermeiden.

Es hat sich nun gezeigt, daß diese Aufgabe in überraschend einfacher und technisch fortschrittlicher Weise durch eine Schaltungsanordnung der eingangs genannten Art gelöst werden kann, deren Besonderheit darin besteht, daß die Schaltkreise zur Erzeugung der Kurvenfahrtsignale (CRV) mit Schaltzweigen zur Ermittlung eines Differenzgeschwindigkeitssignals, das die Geschwindigkeitsdifferenz zwischen den Rädern einer Fahrzeugachse wiedergibt, und mit Schaltzweigen zur Bestimmung eines systembedingten, von der momentanen Kurvenfahrt unabhängigen Fehlersignals ($E_{sys}$) bzw. Korrektursignals, das bei der Auswertung der Differenzgeschwindigkeitssignale und bei der Ermittlung der Kurvenfahrtsignale (CRV) berücksichtigt wird, ausgerüstet sind.

Die Erfindung beruht also auf der Überlegung, daß ein sicheres Erkennen der Kurvenfahrt eines Fahrzeuges unter kritischen Bedingungen, insbesondere bei hoher Geschwindigkeit, die nur einen großen Kurvenradius zuläßt, möglich wird, wenn gewissermaßen durch "Langzeitbeobachtung" der systembedingte Fehler ermittelt und dessen Einfluß auf die Kurvenerkennung ausgeschaltet wird. Solche systembedingten Fehler, die z.B. auf Unterschiede des Abrollumfanges zurückgehen und beim Vergleich der Drehgeschwindigkeiten der beiden Räder einer Achse zu einer Differenz führen und Kurvenfahrt vortäuschen, liegen nämlich durchaus in der Größenordnung der Nutzsignale. Unterschiede im Abrollumfang von 5% können durch unterschiedliche Reifenabnutzung leicht entstehen; eine Geschwindigkeitsdifferenz von 5% bei gleichem Abrollumfang ist andererseits ein deutliches Signal für eine Kurvenfahrt.

Andere Ursachen für Differenzen zwischen den vom linken und rechten Rad einer Achse bei Geradeausfahrt abgeleiteten Signalen sind Toleranzen der mechanischen und elektronischen Bauteile etc. Bei einem Reifenwechsel, durch Verstellung oder durch Alterung der Bauteile ändern sich die systembedingten Fehler, weshalb Eichvorgänge zur Beseitigung dieser Fehler häufig wiederholt werden müßten. Mit der erfindungsgemäßen Schaltung wird dagegen diese "Eichung" ständig durchgeführt. Wie im folgenden noch erläutert wird, würde sich die erfindungsgemäße Schaltungsanordnung nach einem Reifenwechsel bereits nach sehr kurzer Zeit auf einen neuen systembedingten Fehler einstellen; die Schaltungsanordnung nach der Erfindung benötigt nur einige Sekunden bis wenige Minuten zum "Erlernen" des neuen Fehlers bzw. der neuen Situation.

Eine präzise Kurvenerkennung ist sowohl für die Blockierschutz- als auch für die Antriebsschlupf-Regelung von großem Vorteil. Dies gilt beispielsweise für Maßnahmen zur Giermomenten-Abschwächung oder für den Druckaufbau bzw. die Drucksteuerung bei schleuderndem Fahrzeug. Zur Steuerung des Antriebsschlupfes beim Anfahren bzw. Beschleunigen in einer Kurve ist ebenfalls eine genaue Kurvenerkennung, möglicherweise sogar eine Kurvenradiuserkennung, notwendig.

Eine vorteilhafte Ausführungsart der erfindungsgemäßen Schaltungsanordnung besteht darin, daß zur Erzeugung des Differenzgeschwindigkeitssignals die prozentuale Abweichung der Geschwindigkeit eines Rades von der Geschwindigkeit des zweiten Rades der gleichen Achse ermittelt wird. Die Geschwindigkeitsdifferenz zwischen den Rädern einer Achse wird zweckmäßigerweise durch Division durch die Geschwindigkeit des momentan langsameren Rades, ggf. auch durch die Geschwindigkeit des schnelleren Rades oder durch eine gemittelte Geschwindigkeit, normiert. Für die weitere Signalverarbeitung ist dies von Nutzen.

Weiterhin ist es nach einer Ausführungsart der Erfindung vorgesehen, zur Bestimmung des systembedingten Fehler- bzw. Korrektursignals das Differenzgeschwindigkeitssignal bzw. die normierte Differenzgeschwindigkeit einem Tiefpaß mit im Vergleich zur Dauer einer üblichen Kurvenfahrt großen Zeitkonstanten, z.B. einem Tiefpaßfilter erster Ordnung mit einer Zeitkonstanten von mindestens 40 Sekunden, zuzuführen. Die Zeitkonstante dieses Filters bestimmt dann gewissermaßen die Zeitspanne, die nach einem Reifenwechsel bzw. nach dem Einschalten der Zündung bis zum "Erlernen" des systembedingten Fehlers notwendig ist.

Es können auch Tiefpaßfilter mit umschaltbarer Zeitkonstanten Verwendung finden, die bei einer Geradeausfahrt beispielsweise auf eine Zeitkonstante von etwa 40 bis 100 Sekunden ausgelegt sind und die beim Erkennen einer Kurvenfahrt auf eine Zeitkonstante von etwa 200 bis 300 Sekunden umgeschalt et werden.

Unter bestimmten Bedingungen ist ein "Einfrieren" eines gelernten systembedingten Fehlers für eine bestimmte Zeitspanne sinnvoll. Hierzu ist die erfindungsgemäße Schaltungsanordnung mit einem Schaltzweig versehen, dem das normierte Differenzgeschwindigkeitssignal und ein konstanter Vergleichswert zugeführt werden und der beim Überschreiten eines Maximalwertes des Differenzgeschwindigkeitssignales die Berücksichtigung dieses Wertes bei der Bestimmung oder Fortschreibung des Fehlersignales unterbindet. Hierdurch wird verhindert, daß sich eine kurzzeitige Störung, die sich in einem zu hohen Differenzgeschwindigkeitssignal äußert, oder ein hohes Nutzsignal (Differenzgeschwindigkeitssignal), das nicht auf einen systembedingten Fehler der beschriebenen Art zurückgehen kann und daher nicht "gelernt" werden darf, auf das Fehlersignal auswirkt.

Die Differenz zwischen dem Differenzgeschwindigkeitssignal und dem systembedingten Fehlersignal wird erfindungsgemäß als Kurvenfahrtsignal ausgewertet.

Weiterhin sind nach einem Ausführungsbeispiel der Erfindung Schaltkreise vorhanden, die aus der momentanen Radgeschwindigkeit, insbesondere aus der Geschwindigkeit des langsameren Rades, einen Kurvenfahrt-Grenzwert ermitteln und mit dem momentanen Kurvenfahrtsignal vergleichen und die ein Störungssignal abgeben, wenn das Kurvenfahrtsignal den Kurvenfahrt-Grenzwert überschreitet.

Durch Vergleich und Auswertung der von zwei (oder von mehreren) Achsen eines Fahrzeugs abgeleiteten Signale der vorgenannten Art läßt sich die Kurvenerkennung noch verbessern. Hierzu werden nach einer weiteren Ausführungsart der Erfindung die Ausgangssignale der den einzelnen Achsen zugeordneten Gesamtschaltungen einer Bewertungsschaltung zugeführt und mit dieser auf Plausibilität überprüft. Dabei erhalten die Bewertungsschaltungen von den einzelnen Gesamtschaltungen Informationen, die die Erkennung der Kurvenfahrt, den Kurvenradius, die Geradeausfahrt, Linkskurve oder Rechtskurve, Differenzgeschwindigkeit usw., und zwar alle oder einige dieser Informationen, beinhalten.

Schließlich besteht eine Ausführungsart der Erfindung noch darin, daß bei einem charakteristischen Unterschied zwischen den Signalen verschiedener Fahrzeugachsen, die z.B. auf die Anbringung eines Notrades mit stark abweichendem (z.B. 20%) Abrollradius zurückführbar sind, eine Umschaltung der Logik und Kompensation dieser Abweichung erfolgt.

Weitere Merkmale, Vorteile und Anwendungsmöglichkeiten der Erfindung gehen aus der folgenden Darstellung von Ausführungsbeispielen anhand der beigefügten Abbildungen hervor.

Es zeigen

Fig. 1   vereinfacht und in symbolischer Blockdarstellung eine Schaltungsanordnung nach der Erfindung zum Vergleich und Auswerten des Drehverhaltens der beiden Räder einer Achse,

Fig. 2   in gleicher Darstellungsweise wie Fig. 1 eine Schaltungsanordnung zur Bewertung und Verknüpfung der von zwei Fahrzeugachsen abgeleiteten, mit jeweils einer Schaltung nach Fig. 1 erzeugten Signale und

Fig. 3 in gleicher Darstellungsweise wie Fig. 2 einen Schaltkreis zur Erkennung und Bewertung einer charakteristischen Differenz zwischen Signalen der Vorder- und Hinterachse.

Die beigefügten Figuren dienen zur Veranschaulichung der erfindungswesentlichen Schaltkreise, die die Kurvenfahrtsignale generieren und die zu einer bekannten elektronischen Schaltungsanordnung zur Steuerung von Kraftfahrzeugbremsanlagen mit Blockierschutz- und/oder Antriebsschlupfregelung gehören.

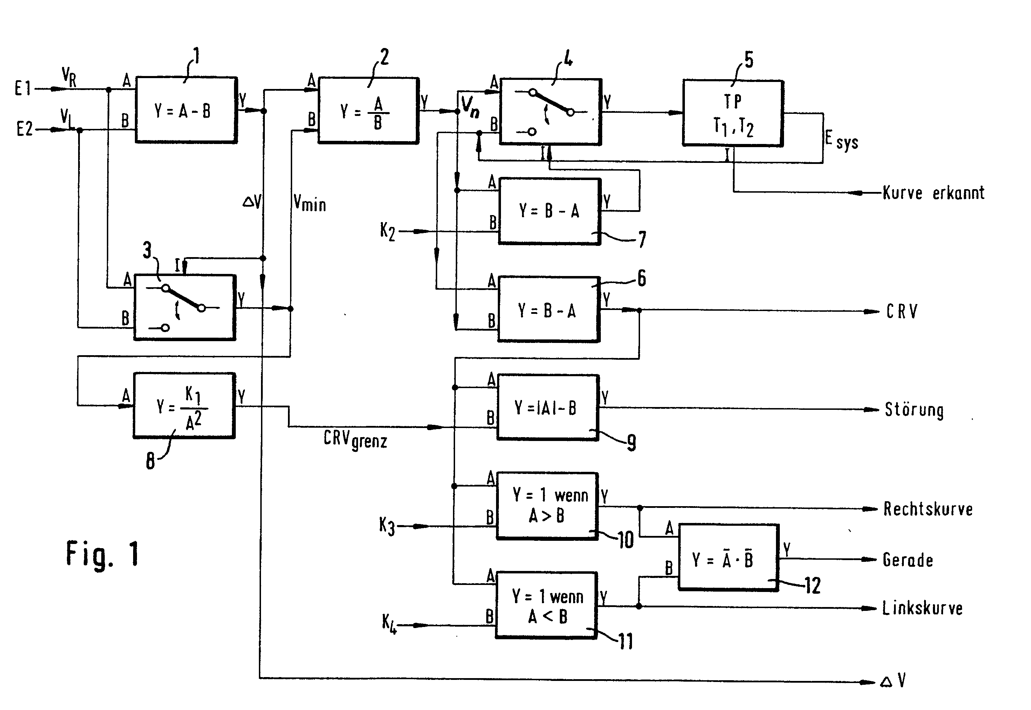

In den Figuren 1 bis 3 sind grundsätzlich die Signale an den Eingängen der einzelnen Schaltblöcke bzw. Schaltzweige mit A und B, das Ausgangssignal mit Y bezeichnet.

Gemäß Fig. 1 werden den Schaltkreisen über die Eingänge E1 und E2 der Gesamtschaltung elektrische Signale ($V_R$, $V_L$) zugeführt, die im dargestellten Ausführungsbeispiel mit Hilfe von an den Vorderrädern angeordneten Sensoren gewonnen wurden und die jeweils das Drehverhalten eines der beiden Vorderräder wiedergeben. Die Radsensoren und die normalerweise erforderlichen Schaltungen zur Aufbereitung der Signale sind, da sie nicht zur Erfindung gehören, in Fig. 1 nicht wiedergegeben.

In einem Differenzbildner 1 wird ein Differenzgeschwindigkeitssignal $\Delta V$ gebildet, dessen Vorzeichen erkennen läßt, ob eine Rechtskurve oder Linkskurve vorliegt. Bei Geradeausfahrt und idealen Bedingungen, d.h. gleichen Abrollradien usw., wird das Signal am Ausgang Y der Stufe 1 zu Null.

In einer anschließenden Divisionsstufe 2 wird die Geschwindigkeitsdifferenz $\Delta V$ normiert, indem das Differenzsignal $\Delta V$ durch die geringere der beiden Radgeschwindigkeiten $V_{min}$ dividiert wird. Mit einer Auswahlstufe 3 wurde hierzu die geringere Geschwindigkeit $V_{min}$ ermittelt und dem Eingang B der Stufe 2 zugeleitet.

Die normierte Differenzgeschwindigkeit $V_n = \Delta V/V_{min}$ am Ausgang der Divisionsstufe 2 wird über einen Umschalter 4 einem Tiefpaß 5, hier einem Tiefpaßfilter erster Ordnung mit umschaltbarer Zeitkonstanten, zugeleitet. Das Ausgangssignal dieses Tiefpasses 5 stellt das Fehlersignal bzw. Korrektursignal $E_{sys}$ dar, das ein Maß ist für die systembedingten Fehler, die auch bei der Geradeausfahrt des Fahrzeuges ein Differenzgeschwindigkeitssignal hervorrufen.

In einem weiteren Differenzbildner 6 wird schließlich die Differenz zwischen der normierten Differenzgeschwindigkeit $V_n$ und dem Fehler- bzw. Korrektursignal $E_{sys}$ gebildet. Dieses Signal CRV =

$V_n - E_{sys}$ dient zur Kurvenerkennung und ist, wenn die Auflösung dieses Signales es zuläßt, sogar ein Maß für den Kurvenradius.

Aus dem Vorzeichen des Kurvenfahrtsignals CRV ist erkennbar, ob es sich um eine Rechts- oder Linkskurve handelt.

Das Tiefpaßfilter 5 ist umschaltbar. In der Grundstellung, die es einnimmt, solange das Signal an dem Stelleingang I Null beträgt, ist die Zeitkonstante $T_1$ des Tiefpaßfilters 5 auf einen Wert zwischen 40 und 100 Sekunden eingestellt. Wurde jedoch in den vorangegangenen Rechenzyklus (loop) "Kurvenfahrt" erkannt, wird dies über den Stelleingang I dem Tiefpaßfilter 5 gemeldet. Ein Signal am Eingang I führt zur Umschaltung der Stufe 5 bzw. zur Erhöhung der Zeitkonstante auf $T_2 = 200$ bis 300 Sekunden. Am einfachsten wird die Umschaltung der Zeitkonstanten durch Erhöhung des ohmschen Widerstandes eines RC-Gliedes realisiert.

Während einer Kurvenfahrt wird folglich die Änderung des Fehlersignals $E_{sys}$ am Ausgang der Stufe 5 als folge des durch die Kurvenfahrt erhöhten Wertes der normierten Differenzgeschwindigkeit $V_n$ erheblich verzögert. Bei Geradeausfahrt werden dagegen systembedingte Fehler mit der Geschwindigkeit der Zeitkonstanten $T_1$ "gelernt".

Störungen, die eine zu hohe, über einem vorgegebenen Schwellwert liegende normierte Differenzgeschwindigkeit $V_n$ hervorrufen und Nutzsignale, die größer sind als die Signale, die durch systembedingte Fehler verursacht werden können, werden durch einen zusätzlichen Schaltungszweig, der einen weiteren Differenzbildender 7 enthält, unterdrückt. Dieser Schwellwert ist durch die Konstante $k_2$ am Eingang B des Differenzbildners 7 symbolisiert. Überschreitet die normierte Differenzgeschwindigkeit $V_n$ einen bestimmten Wert, entsteht am Ausgang der Stufe 7 ein Signal, das über den Stelleingang I zur Umschaltung des Schalters 4 führt. Das Fehlersignal $E_{sys}$ wird dadurch über den Eingang B des Schalters 4 zum Eingang des Tiefpasses 5 zurückgeführt, was für die Zeitdauer der Störung zu einem "Einfrieren" des gelernten Fehlers bzw. zu einer Konstanthaltung des Fehlersignals $E_{sys}$ führt.

Eine Überprüfung des Kurvenfahrtsignals CRV nach Plausibilitätskriterien wird mit Hilfe eines zusätzlichen Schaltungszweiges (8,9) erreicht. Hierzu wird zunächst die Geschwindigkeit $V_{min}$ des langsameren Rades der betrachteten Achse in der Stufe 8 mit Tabellenwerten verglichen. Das Ausgangssignal $CRV_{grenz}$ der Stufe 8 ist direkt oder indirekt ein Maß für den Kurvenradius, den das Fahrzeug bei der gemessenen Fahrzeuggeschwindigkeit $V_{min}$ ohne Gefährdung der Fahrstabilität nicht unterschreiten kann, und damit für den Maximalwert oder Grenzwert des Kurvenfahrtsignals CRV. Eine enge Kurve kann bekanntlich ein Fahrzeug nur mit geringer Geschwindigkeit durchfahren. Aus einem Vergleich des aus der momentanen Geschwindigkeit $V_{min}$ abgeleiteten Grenzwertes $CRV_{grenz}$, der am Ausgang der Stufe 8 zur Verfügung steht, mit dem Kurvenfahrtsignal CRV läßt sich erkennen, ob bei der gemessenen Geschwindigkeit ein solcher Kurvenradius überhaupt möglich ist. Der Vergleich wird mit Hilfe des Differenzbildners 9 durchgeführt. Wird das Plausibilitätskriterium nicht erfüllt, signalisiert die Stufe 9 eine Störung.

Zur Auswertung des Vorzeichens des Kurvenfahrtsignals CRV und damit zum Feststellen, ob sich das Fahrzeug in einer Kurvenfahrt nach rechts oder links befindet, dienen zwei weitere Schaltungszweige 10 und 11. Schließlich wird über den Ausgang eines weiteren Zweiges 12 noch "Geradeausfahrt" signalisiert, wenn weder ein Rechtskurven- noch ein Linkskurvensignal ansteht.

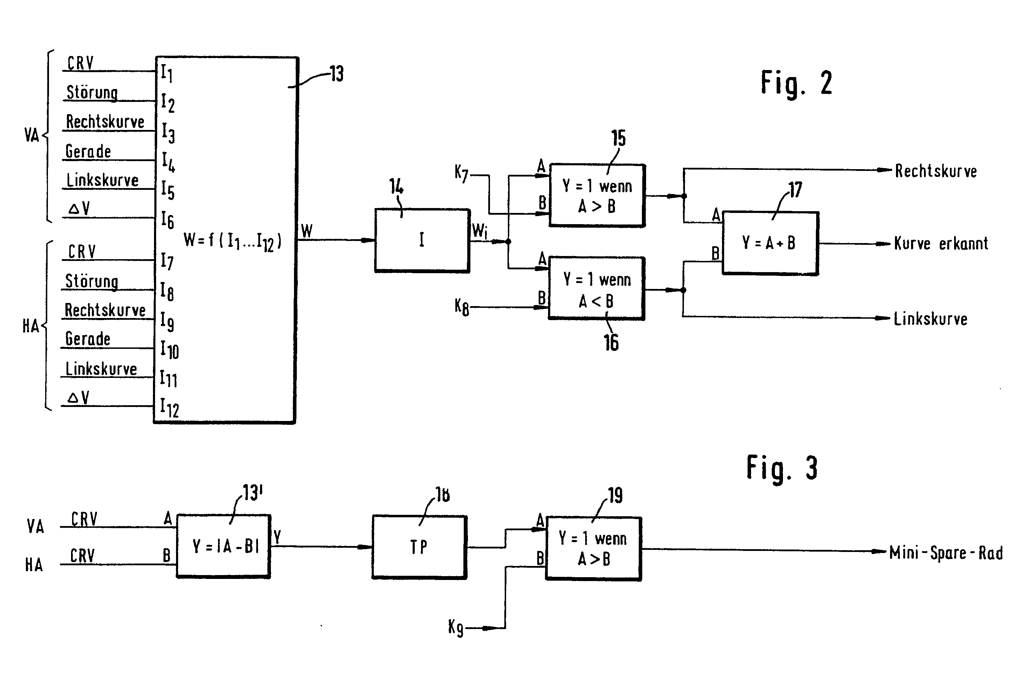

Fig. 2 zeigt eine Bewertungsmatrix oder Bewertungsschaltung 13, der die mit der Gesamtschaltung nach Fig. 1 erzeugten Signale von der Vorderachse und Hinterachse zugeführt werden. Mit individuellen Gesamtschaltungen (1 -12) der in Fig. 1 gezeigten Art werden die Vorderachs- und Hinterachssignale unabhängig voneinander erzeugt.

Die Überprüfung der Vorderachs- und Hinterachssignale auf Plausibilität mit Hilfe der Berwertungsschaltung 13 läßt Fehler oder Störungen erkennen und verbessert die Signalauswertung. Abgesehen von Sonderfällen, müssen die entsprechenden von der Vorderachse und Hinterachse abgeleiteten Signale übereinstimmen. In einem der Bewertungsschaltung 13 nachgeschalteten Integrator 14 werden die Resultate der Bewertungen durch die Schaltung 13 zusammengefaßt. Das Signal $W_I$ am Ausgang des Integrators 14 ermöglicht nach einem Vergleich mit Grenzwerten, die durch die Konstanten $k_7$ und $k_8$ der nachfolgenden Stufen 15 und 16 in Fig. 2 symbolisiert sind, eine sichere Aussage über die Kurvenfahrt und über die Richtung der befahrenen Kurve, d.h. "Rechtskurve" oder "Linkskurve". Über ein ODER-Gatter 17 wird ein Kurvenerkennungssignal generiert.

Beim Vergleich der Eingangsinformationen an den Eingängen $I_1$ bis $I_6$ mit den entsprechenden Informationen an den Eingängen $I_7$ bis $I_{12}$ wird bei widersprüchlichen Eingangsgrößen das Ausgangssignal W der Schaltung 13 minimal, bei schlüssigen Eingangsgrößen nimmt es dagegen ein Maximum an. Der nachgeschaltete Integrator 14 liefert dann ein Signal $W_i$, welches die Resultate der zeitlich aufeinanderfolgenden Bewertungen zusammenfaßt.

Fig. 3 bezieht sich auf eine Zusatzschaltung, die zur Erkennung der Anbringung eines Notrades (Mini-Spare-Reserverads) dient. Solche Reserveräder haben einen bis zu ca. 20% geringeren Abrollumfang als die Standardräder. Die Montage eines solchen Reserverades zeigt sich dadurch, daß nur an einer Achse eine relativ große Differenzgeschwindigkeit und damit ein scheinbares Kurvenfahrtsignal CRV auftritt.

Der Vergleich der CRV-Signale von Vorderachse VA und Hinterachse HA mit Hilfe einer Bewertungsschaltung 13' ergibt also ein für das Anbringen eines Mini-Spare-Reserverades typischen Differenzsignales. Durch eine "Langzeitbeobachtung" wird auch dieser Fall erkannt und eine Korrektur der durch das Reserverad erzeugten fehlerhaften Radgeschwindigkeit ermöglicht. Hierzu ist das Tiefpaßfilter 18 mit einer Zeitkonstanten von beispielsweise 2 bis 30 Sekunden vorgesehen. Das Ausgangssignal dieses Tiefpaßfilters 18 wird in der nachfolgenden Vergleichsstufe 19 mit einem typischen Schwellwert, den die Konstante $k_9$ symbolisiert, verglichen. Überschreitet langzeitig das Ausgangssignal der Stufe 18 den Schwellwert $k_9$, läßt dies auf die Anbringung des Mini-Spare-Reserverades schließen. Durch eine Verringerung der am Ort des Reserverades gemessenen Drehgeschwindigkeit um einen aus dem geringeren Raddurchmesser errechneten Betrag läßt sich die Regelung der besonderen Situation anpassen.

## Patentansprüche

1. Schaltungsanordnung für Kraftfahrzeug-Bremsanlagen mit Blockierschutz- und/oder Antriebsschlupf-Regelung, mit Radsensoren zur Erzeugung von elektrischen Signalen, die das Raddrehverhalten darstellen, mit elektronischen Schaltkreisen zur Aufbereitung, logischen Verknüpfung und Verarbeitung der Sensorsignale und zur Erzeugung von Bremsdruck- und/oder Antriebsmoment-Steuersignalen, mit Schaltkreisen zur Kurvenerkennung und zur Erzeugung von für die Kurvenfahrt charakteristischen Signalen und zum Vergleich dieser Signale mit der Farhzeuggeschwindigkeit, dadurch **gekennzeichnet,** daß die Schaltkreise zur Erzeugung der Kurvenfahrtsignale (CRV) mit Schaltzweigen (1,2) zur Ermittlung eines Differenzgeschwindigkeitssignals ($\Delta V, V_n$), das die Geschwindigkeitsdifferenz zwischen den Rädern einer Fahrzeugachse (Va,Ha) wiedergibt, und mit Schaltzweigen (5) zur Bestimmung eines systembedingten, von der momentanen Kurvenfahrt unabhängigen Fehlersignals ($E_{sys}$) bzw. Korrektursignals, das bei der Auswertung der Differenzgeschwindigkeitssignale ($\Delta V, V_n$) und bei der Ermittlung der Kurvenfahrtsignale (CRV) berücksichtigt wird, ausgerüstet sind.

2. Schaltungsanordnung nach Anspruch 1, dadurch **gekennzeichnet,** daß zur Ermittlung des Differenzgeschwindigkeitssignals $(V_n)$ die prozentuale Abweichung der Geschwindigkeit $(V_R, V_L)$ eines Rades von der Geschwindigkeit des zweiten Rades der gleichen Achse ermittelt wird.

3. Schaltungsanordnung nach Anspruch 2, dadurch **gekennzeichnet,** daß zur Ermittlung des Differenzgeschwindigkeitssignals $(V_n)$ die Geschwindigkeitsdifferenz $(\Delta V)$ zwischen den Rädern einer Achse durch Division durch eine Radgeschwindigkeit, z.B. durch die Geschwindigkeit des momentan langsameren Rades $(v_{min})$, normiert wird.

4. Schaltungsanordnung nach Anspruch 2 oder 3, dadurch **gekennzeichnet,** daß zur Bestimmung des Fehlersignals $(E_{sys})$ das Differenzgeschwindigkeitssignal $(\Delta V)$ bzw. die normierte Differenzgeschwindigkeit $(V_n)$ einem Tiefpaß mit im Vergleich zur Dauer einer üblichen Kurvenfahrt großer Zeitkonstante, z.B. einem Tiefpaßfilter (5) erster Ordnung mit einer Zeitkonstanten von mindestens 40 Sekunden, zugeführt wird.

5. Schaltungsanordnung nach Anspruch 4, dadurch **gekennzeichnet,** daß ein Tiefpaßfilter (5) mit umschaltbarer Zeitkonstante $(T_1, T_2)$ vorgesehen ist und daß beim Vorliegen eines Kurvenfahrtsignals (CRV) eine Umschaltung auf eine noch größere Zeitkonstante $(T_2)$ erfolgt.

6. Schaltungsanordnung nach Anspruch 5, dadurch **gekennzeichnet,** daß das Tiefpaßfilter (5) bei Geradeausfahrt auf eine Zeitkonstante $(T_1)$ von etwa 40 bis 100 Sekunden ausgelegt und beim Erkennen einer Kurvenfahrt auf eine Zeitkonstante $(T_2)$ von etwa 200 bis 300 Sekunden umgeschaltet wird.

7. Schaltungsanordnung nach einem der Ansprüche 4 - 6, dadurch **gekennzeichnet,** daß ein Schaltzweig (4,7) vorhanden ist, dem das normierte Differenzgeschwindigkeitssignal $(V_n)$ und ein konstanter Vergleichswert $(k_2)$ zugeführt werden und der beim Überschreiten eines maximalen Differenzgeschwindigkeitssignals die Berücksichtigung dieses Signals bei der Bestimmung bzw. bei der fortlaufenden Korrektur des Fehlersignals $(E_{sys})$ unterbindet.

8. Schaltungsanordnung nach einem der Ansprüche 2 - 7, dadurch **gekennzeichnet,** daß die Differenz zwischen dem Differenzgeschwindigkeitssignal und dem Fehlersignal $(E_{sys})$ als Kurvenfahrtsignal (CRV) ausgewertet wird.

9. Schaltungsanordnung nach einem der Ansprüche 1 - 8, dadurch **gekennzeichnet,** daß Schaltzweige (8) vorhanden sind, die aus der momentanen Radgeschwindigkeit $(V_R, V_L)$, insbesondere aus der Geschwindigkeit des langsameren Rades $(V_{min})$, einen Kurvenfahrt-Grenzwert $(CRV_{grenz})$ ermitteln und mit dem momentanen Kurvenfahrtsignal (CRV) vergleichen und die ein Störsignal abgeben, wenn das Kurvenfahrtsignal (CRV) den Kurvenfahrt-Grenzwert überschreitet.

10. Schaltungsanordnung nach einem der Ansprüche 1 - 9, dadurch **gekennzeichnet,** daß den Achsen (VA,HA) eines Fahrzeugs je eine von den anderen Achsen unabhängige Gesamtschaltung (1 - 12; Fig. 1) zur Erzeugung des Kurvenfahrtsignals (CRV) zugeordnet sind und daß die Ausgangssignale dieser Gesamtschaltungen (1 - 12) einer Bewertungsschaltung (13,13') zugeführt und mit dieser auf Plausibilität überprüft werden.

11. Schaltungsanordnung nach Anspruch 10, dadurch **gekennzeichnet,** daß der Bewertungsschaltung (13) von den einzelnen Gesamtschaltungen (1 - 12) Informationen über die Erkennung der Kurvenfahrt, den Kurvenradius, die Geradeausfahrt, Linkskurve, Rechtskurve, Differenzgeschwindigkeit etc., und zwar alle oder einige dieser Informationen, zugeführt werden.

12. Schaltungsanordnung nach Anspruch 10 oder 11, dadurch **gekennzeichnet,** daß Schaltzweige (13',18,19) vorhanden sind, die bei einem charakteristischen Unterschied zwischen den Signalen verschiedener Fahrzeugachsen (VA,HA) bzw. Gesamtschaltungen (1 -12), der z.B. auf das Anbringen eines Notrades (Mini-Spare-Rades) mit abweichendem Abrollradius zurückzuführen ist, eine Korrektur der Auswerteschaltung, z.B. bei der Erzeugung des Differenzgeschwindigkeitssignals, bewirken.

**Claims**

1. A circuit configuration for vehicular brake systems with anti-lock control and/or traction slip control, equipped with wheel sensors for generating electric signals representative of the wheel rotational behaviour, with electronic circuits for conditioning, logically combining and processing the sensor signals and for generating braking-pressure and/or starting-torque control signals, with circuits for the cornering identification and for generating signals characteristic of cornering and for comparing these signals with the vehicle speed,
**characterized** in that the circuits for generating the cornering signals (CRV) are equipped with circuit branches (1, 2) for ascertaining a difference speed signal ($\Delta$ V, $V_n$) which represents the differential speed between the wheels of a vehicle axle (Va, Ha), and with circuit branches (5) for determining a system-inherent error signal ($E_{sys}$) or correction signal which is independent of the instantaneous cornering action and which is taken into account when evaluating the speed difference signals ($\Delta$ V, $V_n$) and when ascertaining the cornering signals (CRV).

2. A circuit configuration as claimed in claim 1,
**characterized** in that the discrepancy in percent of the speed ($V_R$, $V_L$) cf one wheel from the speed of the second wheel of the same axle is ascertained for defining the speed difference signal ($V_n$).

3. A circuit configuration as claimed in claim 2,
**characterized** in that, for defining the speed difference signal ($V_n$), the difference in speed ($\Delta$ V) between the wheels of one axle is standardized by division by a wheel speed, e.g. division by the speed of the instantaneously slower wheel ($V_{min}$).

4. A circuit configuration as claimed in claim 2 or 3,
**characterized** in that, for the determination of the error signal ($E_{sys}$), the speed difference signal ($\Delta$ V) or the standardized differential speed ($V_n$) is supplied to a low pass having a great time constant in comparison with the duration of conventional cornering, i.e. a first-order low-pass filter (5) having a time constant of at least 40 seconds.

5. A circuit configuration as claimed in claim 4,
**characterized** in that a low-pass filter (5) with a switchable time constant ($T_1$, $T_2$) is provided, and in that change-over to a still greater time constant ($T_2$) will be effected in the presence of a cornering signal (CRV).

6. A circuit configuration as claimed in claim 5,
**characterized** in that, during travel straight ahead, the low-pass filter (5) is dimensioned to a time constant ($T_1$) of roughly 40 to 100 seconds and is switched over to a time constant ($T_2$) of roughly 200 to 300 seconds when cornering is identified.

7. A circuit configuration as claimed in any one of the claims 4 to 6,
**characterized** in that there is provided a circuit branch (4, 7) which is furnished with the standardized speed difference signal ($V_n$) and with a constant comparative value ($k_2$) and which, when a maximum value of the speed difference signal is exceeded, precludes that this signal is taken into account when determining or continuously correcting the error signal ($E_{sys}$).

8. A circuit configuration as claimed in any one of the claims 2 to 7,
**characterized** in that the difference between the speed difference signal and the error signal ($E_{sys}$) is evaluated as cornering signal (CRV).

9. A circuit configuration as claimed in any one of the claims 1 to 8,
**characterized** in that there are provided circuit branches (8) which determine a cornering limit value ($CRV_{grenz}$) from the instantaneous wheel speed ($V_R$, $V_L$), in particular from the speed of the slower wheel ($V_{min}$), and compare it with the instantaneous cornering signal (CRV) and which will issue a spurious signal when the cornering signal (CRV) exceeds the cornering limit value.

10. A circuit configuration as claimed in any one of the claims 1 to 9,
**characterized** in that allocated to the axles (VA, HA) of a vehicle is each one complete circuit (1 to 12; Fig. 1) independent of the other axles and destined to generate the cornering signal (CRV), and in that the output signals of these complete circuits (1 to 12) are delivered to an evaluating circuit (13, 13') and checked by said for reasonableness.

11. A circuit configuration as claimed in claim 10,
**characterized** in that the evaluating circuit (13) is supplied by the individual complete circuits (1 to 12) with information on the identification of cornering, the bend radius, the travel straight ahead, left-hand bend, right-hand bend, differential speed etc., and, that is to say, with all or some of these data.

12. A circuit configuration as claimed in claim 10 or 11,
**characterized** in that there are provided circuit branches (13', 18, 19) which, in the presence of a characteristic difference between the signals of different vehicle axles (VA, HA) or complete circuits (1 to 12), the said difference being due, for instance, to the mounting of a spare wheel (mini-spare wheel) with a different tread radius, will bring about a correction of the evaluating circuit, for instance when generating the speed difference signal.

**Revendications**

1. Agencement de circuit pour systèmes de freinage, pour véhicules automobiles, à régulation antiblocage et/ou régulation du glissement de traction, comprenant des capteurs de roue, destinés à produire des signaux électriques qui représentent le comportement des roues en rotation, des circuits électroniques de mise en forme des signaux de capteur, réalisation d'opérations logiques sur ceux-ci et traitement de ceux-ci et de production de signaux de commande de pression de freinage et/ou de couple de traction, et des circuits de reconnaissance de courbe, de production de signaux caractéristiques de la conduite en courbe et de comparaison de ces signaux avec la vitesse du véhicule, caractérise en ce que les circuits de production de signaux de conduite en courbe (CRV) comprennent des branches de circuit (1, 2) destinées à l'établissement d'un signal de vitesse differentielle ($\Delta V$, $V_n$), qui représente la différence de vitesse entre -les roues d'un essieu ($V_a$, $H_a$) du véhicule, et des branches de circuit (5) destinées à l'établissement d'un signal d'erreur ($E_{sys}$), ou d'un signal de correction, fonction du système et indépendant de la conduite en courbe alors en cours, qui est pris en considération lors de l'exploitation des signaux de vitesse différentielle ($\Delta V$, $V_n$) et lors de l'établissement des signaux de conduite en courbe (CRV).

2. Agencement de circuit suivant la revendication 1, caractérisé en ce que, en vue de l'établissement du signal de vitesse différentiel ($V_n$), l'écart de la vitesse ($V_R$, $V_L$) d'une roue, en pour cent, par rapport à la vitesse de la seconde roue du même essieu fait l'objet d'une détermination.

3. Agencement de circuit suivant la revendication 2, caractérisé en ce que, en vue de l'établissement du signal de vitesse différentielle ($V_n$), la différence de vitesse ($\Delta V$) entre les roues d'un essieu fait l'objet d'une normalisation par division par une vitesse de roue, par exemple par la vitesse ($V_{min}$) de la roue momentanément la plus lente.

4. Agencement de circuit suivant la revendication 2 ou 3, caractérisé en ce que, en vue de l'établissement du signal d'erreur ($E_{sys}$) fonction du système, le signal de vitesse différentielle ($\Delta V$), ou la vitesse différentielle normalisée ($V_n$), est envoyé à un élément passe-bas à constante de temps assez importante par comparaison avec la durée d'une conduite en courbe courante, par exemple à un filtre passe-bas (5) du premier ordre possédant une constante de temps d'au moins 40 secondes.

5. Agencement de circuit suivant la revendication 4, caractérisé en ce qu'il est prévu un filtre passe-bas (5) possédant une constante de temps ($T_1$, $T_2$) pouvant faire l'objet d'un changement de valeur et en ce que, lorsqu'il se présente un signal de conduite en courbe (CRV), une commutation est réalisée vers une constante de temps encore plus grande ($T_2$).

6. Agencement de circuit suivant la revendication 5, caractérisé en ce que, dans le cas d'une conduite en ligne droite, le filtre passe-bas (5) est par exemple réglé sur une constante de temps ($T_1$) de 40 à 100 secondes environ et, en cas de reconnaissance d'une conduite en courbe sur une constante de temps ($T_2$) de 200 à 300 secondes environ.

7. Agencement de circuit suivant l'une des revendications 4 à 6, caractérisé en ce qu'il est prévu une branche de circuit (4, 7) à laquelle sont envoyés le signal de vitesse différentielle normalisé ($V_n$) et une valeur de comparaison ($k_2$) constante et qui, dans le cas où un signal maximal de vitesse différentielle est dépassé, interrompt la prise en considération de ce signal pour l'établissement du signal d'erreur ($E_{sys}$) ou pour la correction continue de ce dernier.

8. Agencement de circuit suivant l'une des revendications 2 à 7, caractérisé en ce que la différence entre le signal de vitesse différentielle et le signal d'erreur ($E_{sys}$) est exploitée en tant que signal de conduite en courbe (CRV).

9. Agencement de circuit suivant l'une des revendications 1 à 8, caractérisé en ce qu'il est prévu des branches de circuit (8) qui établissent une valeur limite de conduite en courbe ($CRV_{limite}$) à partir de la vitesse momentanée de roue ($V_R$, $V_L$), notamment à partir de la vitesse ($V_{min}$) de la roue la plus lente, et comparent cette valeur limite au signal instantané de conduite en courbe (CRV), en délivrant un signal de perturbation lorsque ce signal de conduite en courbe (CRV) dépasse la valeur limite de conduite en courbe.

**10.** Agencement de circuit suivant l'une des revendications 1 à 9, caractérisé en ce qu'à chacun des essieux (VA, HA) d'un véhicule, il est associé un circuit d'ensemble (1-12 ; figure 1) indépendant des autres essieux et permettant de produire le signal de conduite en courbe (CRV) et en ce que les signaux de sortie de ces circuits d'ensemble (1-12) associés aux différents essieux sont envoyés à un circuit d'exploitation (13, 13') et font l'objet, à l'aide de celui-ci, d'une vérification de plausibilité.

**11.** Agencement de circuit suivant la revendication 10, caractérisé en ce qu'il est envoyé aux circuits d'exploitation (13), à partir des différents circuits d'ensemble (1-12), des informations sur la reconnaissance de la conduite en courbe, le rayon de courbe, la conduite en ligne droite, le sens à gauche de la courbe, le sens à droite de la courbe, la vitesse différentielle, etc., et ceci en ce qui concerne toutes ces informations ou certaines de celles-ci.

**12.** Agencement de circuit suivant la revendication 10 ou 11, caractérisé en ce qu'il est prévu des branches de circuit (13', 18, 19) qui réalisent une correction du circuit d'exploitation, par exemple lors de la production du signal de vitesse différentielle, dans le cas d'une différence caractéristique entre les signaux de différents essieux de véhicule (VA, HA), ou de différents circuits d'ensemble (1-12), différence qui peut par exemple être attribuée à la mise en place d'une roue de secours mini-roue de rechange) dont le rayon de roulement diffère.

Fig. 1

EP 0 293 561 B1

**Fig. 2**

**Fig. 3**

EP 0 293 561 B1